# DEMANDE DE BREVET EUROPEEN

(11) **EP 0 999 625 A1**
(43) Date de publication de la demande: **10.05.2000**
(21) Numéro de dépôt: 99410134.3
(22) Date de dépôt: 15.10.1999
(51) Int. Cl.: H02B 13/055, G01N 9/26, G01F 23/72

(54) **Détecteur magnétique de baisse de densité et de pression d'un gaz isolant pour appareillage électrique**

(30) Priorité: 06.11.1998 FR 9814171
(71) Demandeur: Schneider Electric Industries SA, 92500 Rueil-Malmaison (FR)
(72) Inventeur: Faure-comte, Franck, 38050 Grenoble cedex 09 (FR); Serve, Dominique, 38050 Grenoble cedex 09 (FR)
(74) Mandataire: Ritzenthaler, Jacques

(57) **Abrégé**

Un détecteur magnétique comprend un soufflet 14 soumis à la variation de pression interne du gaz, et une liaison dynamique magnétique 16 constituée par un premier aimant permanent 20 accouplé à l'une des extrémités du soufflet 14, et coopérant par attraction magnétique à travers la paroi 18 amagnétique de la cuve 12 avec un deuxième aimant permanent 22 se trouvant à l'extérieur. Chaque aimant permanent 20, 22 présente une forme cylindrique, et une polarisation magnétique radiale, autorisant lors de la déformation du soufflet 14, des mouvements de roulement en sens inverse des aimants 20, 22 le long des faces opposées de la paroi 18 amagnétique.

Application : contrôle d'une baisse de densité et de pression d'un gaz pour l'isolement d'un appareillage électrique.

## Description

### Domaine technique de l'invention

L'invention est relative à un détecteur magnétique pour le contrôle d'une baisse de densité et de pression d'un gaz isolant contenu dans une cuve étanche d'un appareillage électrique, ledit détecteur comprenant :
- un soufflet logé à l'intérieur de la cuve, et apte à se déformer en fonction de la variation de pression interne du gaz,
- une liaison dynamique magnétique constituée par un premier aimant permanent accouplé à l'une des extrémités du soufflet, et coopérant par attraction magnétique à travers la paroi amagnétique de la cuve avec un deuxième aimant permanent se trouvant à l'extérieur de la cuve,
- et un dispositif de signalisation et/ou de déclenchement associé au deuxième aimant permanent pour indiquer l'état de l'isolement gazeux interne de l'appareillage.

### Etat de la technique

Le document EP 77981 décrit un détecteur magnétique du genre mentionné, dans lequel les aimants ont des formes parallélépipédiques. Le premier aimant permanent à l'intérieur de la cuve est séparé de la paroi par un intervalle, tandis que le deuxième aimant est directement en contact avec la face extérieure de la paroi. Le déplacement en translation du premier aimant permanent provoque un glissement du deuxième aimant le long de la paroi, ce qui engendre des forces de frottement néfastes à la précision du détecteur, notamment lors de faibles variations de pression.

### Objet de l'invention

Un premier objet de l'invention consiste à réaliser un détecteur magnétique capable de détecter avec une grande précision, des baisses de pression de gaz isolant dans une cuve étanche fermée à vie.

Un deuxième objet de l'invention consiste à réaliser un détecteur magnétique capable de détecter des baisses de pression de gaz isolant indépendamment de la température, et de rester insensible aux vibrations mécaniques et aux champs magnétiques intérieurs et extérieurs.

Le détecteur magnétique selon l'invention est caractérisé en ce que chaque aimant permanent présente une forme cylindrique, et une polarisation magnétique radiale, autorisant lors de la déformation du soufflet, des mouvements de roulement en sens inverse des aimants le long des faces opposées de la paroi amagnétique.

Selon un mode de réalisation préférentiel, le premier aimant permanent est doté d'un orifice axial traversé avec jeu par un axe d'accouplement à au moins une tringle de transmission reliée au soufflet. La tringle de transmission du mouvement de déformation du soufflet s'étend avantageusement selon une direction parallèle à la paroi. Le soufflet, la tringle de transmission, et le premier aimant permanent sont positionnés dans un carter de protection non étanche, fixé à la paroi de la cuve par des moyens d'assemblage.

Selon une caractéristique de l'invention, la course en translation du deuxième aimant permanent est identique à celle du soufflet, ce dernier étant fermé à ses deux extrémités de manière étanche.

Selon une autre caractéristique de l'invention, le soufflet est réalisé en un matériau amagnétique, notamment en acier inoxydable, pour être insensible aux champs magnétiques intérieurs et extérieurs.

### Description sommaire des dessins

D'autres avantages et caractéristiques ressortiront plus clairement de la description qui va suivre d'un mode de réalisation de l'invention, donné à titre d'exemple non limitatif et représenté aux dessins annexés dans lesquels :
- la figure 1 est une vue schématique en élévation du détecteur magnétique selon l'invention ;
- la figure 2 montre une vue en perspective d'un détecteur monté sur une cuve d'un appareillage électrique à isolement gazeux ;
- la figure 3 représente une vue en perspective du détecteur prêt à être monté sur la cuve ;
- la figure 4 montre la partie interne du détecteur comprenant le soufflet et le premier aimant permanent.

### Description d'un mode de réalisation préférentiel

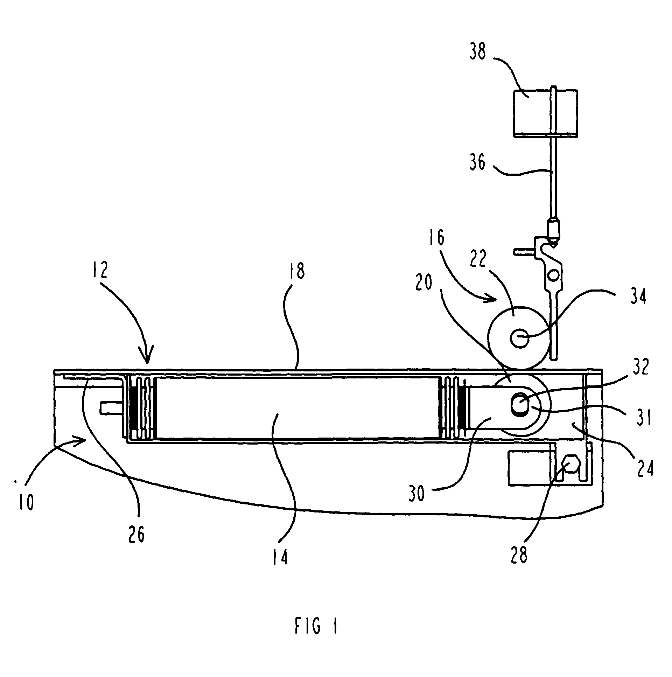

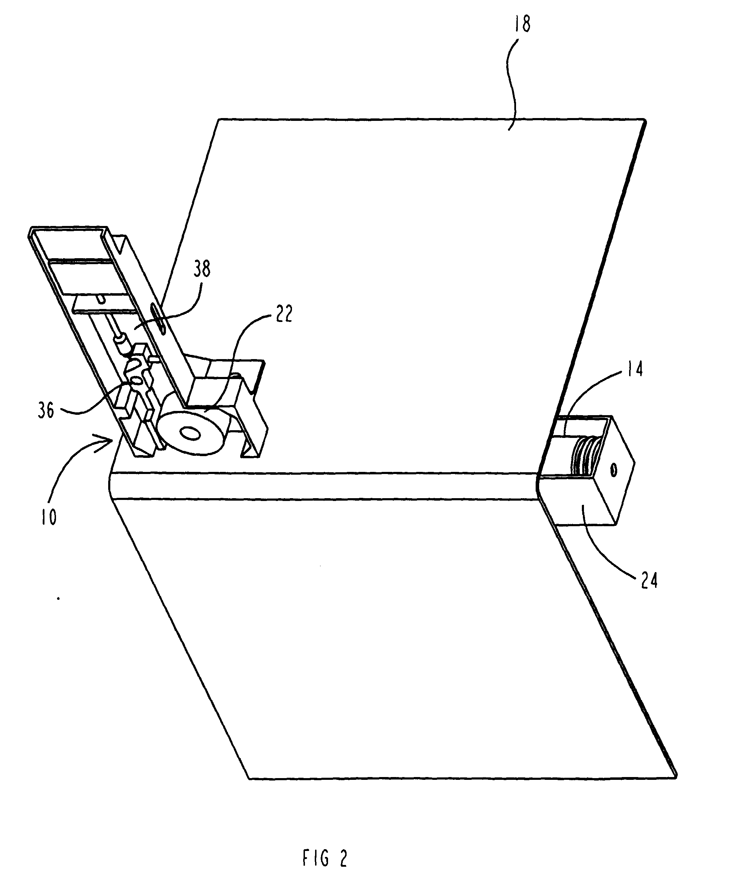

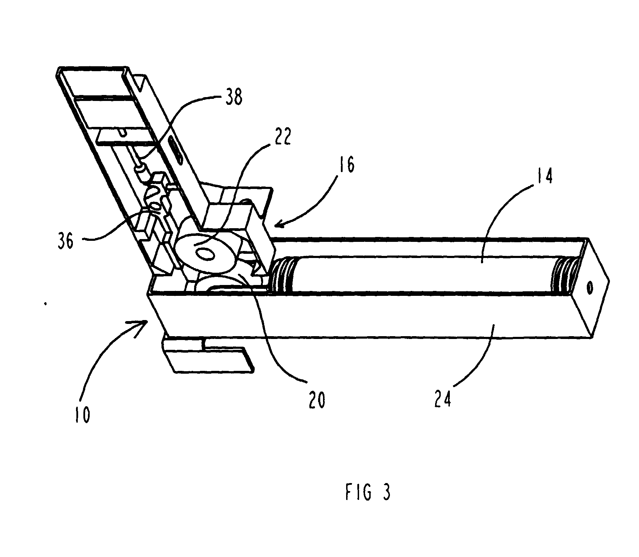

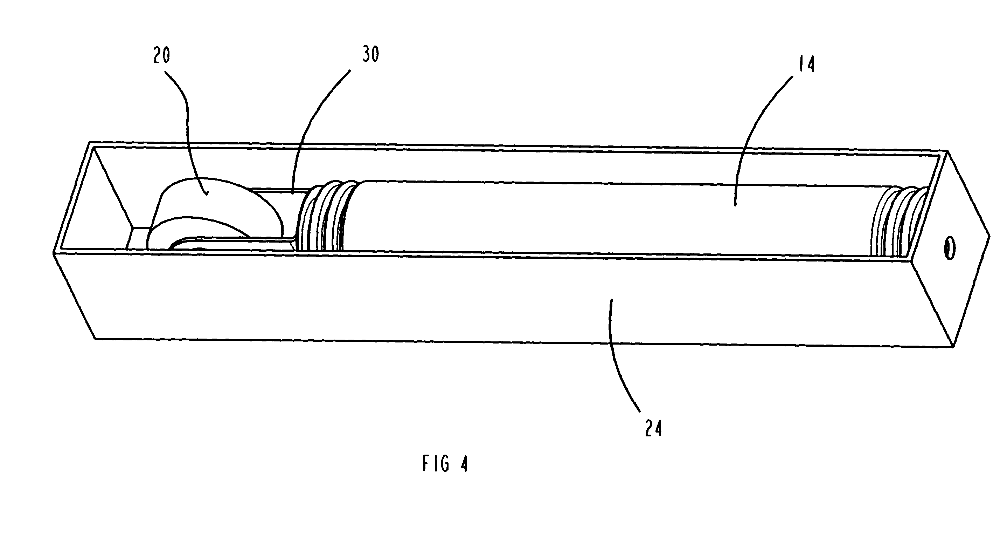

En référence aux figures 1 à 4, un détecteur magnétique 10 de baisse de densité et de pression d'un gaz isolant contenu dans une cuve 12 étanche d'un appareillage électrique, comporte un soufflet 14 associé à une liaison dynamique magnétique 16 à travers la paroi 18 de la cuve 12. Le gaz isolant est un gaz électronégatif, par exemple de l'hexafluorure de soufre SF6.

Le soufflet 14 est logé à l'intérieur de la cuve 12, et est fermé à ses deux extrémités de manière étanche, en étant soumis à la pression interne du gaz. Le soufflet 14 est réalisé en acier inoxydable, ou en tout autre matériau amagnétique, pour être insensible aux champs magnétiques intérieurs et extérieurs

La paroi 18 de la cuve 12 possède une épaisseur de l'ordre de 2 à 3 mm, et est réalisée en acier inoxydable. L'extérieur de la cuve 12 se trouve à la pression atmosphérique ( pression relative de 0 bar), tandis que la pression nominale relative du gaz SF6 à l'intérieur de la cuve 12 est de l'ordre de 0,2 bar. Toute baisse de pression du gaz par rapport à cette valeur doit être signalée par le détecteur magnétique 10 pour conserver une bonne tenue diélectrique de l'appareillage.

La liaison dynamique magnétique 16 comporte un premier aimant permanent 20 cylindrique accouplé à l'une des extrémités du soufflet 14 à l'intérieur de la cuve 12, et coopérant par couplage magnétique avec un deuxième aimant permanent 22 cylindrique se trouvant à l'extérieur.

Le soufflet 14 et le premier aimant permanent 20 sont agencés dans un carte 24 de protection non étanche, fixé à la paroi 18 de la cuve 12 par des moyens d'assemblage 26, 28. La transmission du mouvement de déformation du soufflet 14 au premier aimant permanent 20 s'effectue au moyen d'une paire de tringles 30 parallèles assujetties à un axe 32 traversant avec jeu un orifice axial 31 de l'aimant 20.

Lors d'une variation de pression du gaz, le déplacement en translation des tringles 30 suite à la déformation du soufflet 14, intervient selon une direction parallèle à la paroi 18 et à l'axe du soufflet 14, et provoque un déplacement par roulement du premier aimant permanent 20 sur la face interne de la paroi 18. L'effet d'attraction magnétique à travers la paroi 18 transmet au deuxième aimant permanent 22 un mouvement de roulement en sens inverse sur la face externe de la paroi 18. Le deuxième aimant permanent 22 comprend un orifice axial 34, et est relié par une liaison mécanique 36 à un dispositif de déclenchement et de signalisation 38.

Chaque aimant permanent 20, 22 cylindrique possède une polarisation magnétique radiale, permettant les mouvements de roulement sur chants de part et d'autre de la paroi 18 amagnétique. La transmission des mouvements de roulement des aimants permanents 20, 22 est réversible, c'est à dire qu'elle intervient aussi bien du premier vers le deuxième lors d'une baisse de pression du gaz, ou du deuxième vers le premier lors du montage du détecteur 10 et de l'ajustage du seuil de déclenchement.

Le fonctionnement du détecteur magnétique 10 de baisse de densité et de pression du gaz s'opère de la manière suivante :

Le soufflet 14 est soumis en permanence à la pression interne du gaz SF6. Sous l'effet d'une baisse de pression du SF6, le soufflet 14 se détend dans le sens de la flèche F1 jusqu'à l'équilibre des forces entre la pression interne du soufflet 14 et la pression du SF6 dans la cuve 12. La course de détente du soufflet 14 atteint quelques millimètres, sollicitant les tringles 30 en translation parallèlement à l'axe du soufflet 14. Le premier aimant permanent 20 roule sur la face interne de la paroi 18 dans le sens des aiguilles d'une montre, et entraîne par attraction magnétique le deuxième aimant permanent 22 en roulement inverse sur la face externe de la paroi 18.

La course en translation du deuxième aimant permanent 22 est identique à celle du soufflet 14, et est suffisante pour transmettre l'information de baisse de pression au dispositif de déclenchement et de signalisation 38 par l'intermédiaire de la liaison 36. Il en résulte une indication visuelle en local et éventuellement une signalisation à distance, avec un déclenchement automatique de l'appareil .
L'ensemble du détecteur 10 est insensible aux vibrations mécaniques provoquées par les manoeuvres de l'appareil, et permet d'obtenir une indication fiable de toute baisse de pression du gaz isolant, indépendamment de la température. Le seuil de déclenchement peut être ajusté avec précision lors du positionnement des aimants 20, 22 sur la paroi 18.

Le détecteur 10 constitue un ensemble interchangeable, pouvant être facilement démonté et remplacé lors d'une révision du poste.

## Revendications

1. Détecteur magnétique pour le contrôle d'une baisse de densité et de pression d'un gaz isolant contenu dans une cuve (12) étanche d'un appareillage électrique, ledit détecteur comprenant :
- un soufflet (14) logé à l'intérieur de la cuve (12), et apte à se déformer en fonction de la variation de pression interne du gaz,
- une liaison dynamique magnétique (16) constituée par un premier aimant permanent (20) accouplé à l'une des extrémités du soufflet (14), et coopérant par attraction magnétique à travers la paroi (18) amagnétique de la cuve (12) avec un deuxième aimant permanent (22) se trouvant à l'extérieur de la cuve (12),
- et un dispositif de signalisation et/ou de déclenchement associé au deuxième aimant permanent (22) pour indiquer l'état de l'isolement gazeux interne de l'appareillage,
caractérisé en ce que chaque aimant permanent ( 20, 22) présente une forme cylindrique, et une polarisation magnétique radiale, autorisant lors de la déformation du soufflet (14), des mouvements de roulement en sens inverse des aimants (20, 22) le long des faces opposées de la paroi (18) amagnétique.

2. Détecteur magnétique selon la revendication 1, caractérisé en ce que le premier aimant permanent (20) est doté d'un orifice axial (31) traversé avec jeu par un axe (32) d'accouplement à au moins une tringle (30) de transmission reliée au soufflet (14).

3. Détecteur magnétique selon la revendication 2, caractérisé en ce que la tringle (30) de transmission du mouvement de déformation du soufflet (14) s'étend selon une direction parallèle à la paroi (18).

4. Détecteur magnétique selon la revendication 3, caractérisé en ce que le soufflet (14), la tringle (30) de transmission, et le premier aimant permanent (20) sont positionnés dans un carter (24) de protection non étanche, fixé à la paroi (18) de la cuve (12) par des moyens d'assemblage ( 26, 28).

5. Détecteur magnétique selon la revendication 1, caractérisé en ce que la course en translation du deuxième aimant permanent (22) est identique à celle du soufflet (14).

6. Détecteur magnétique selon la revendication 1, caractérisé en ce que le soufflet (14) est fermé à ses deux extrémités de manière étanche.

7. Détecteur magnétique selon la revendication 1 ou 6, caractérisé en ce que le soufflet (14) est réalisé en un matériau amagnétique, notamment en acier inoxydable, pour être insensible aux champs magnétiques intérieurs et extérieurs.

8. Détecteur magnétique selon l'une des revendications 1 à 7, caractérisé en ce que la paroi (18) de la cuve (12) est en acier inoxydable avec une épaisseur de l'ordre de 2 à 3 mm.
